# EUROPEAN PATENT APPLICATION

(11) **EP 4 641 038 A1**
(43) Date of publication of application: **29.10.2025**
(21) Application number: 24172804.7
(22) Date of filing: 26.04.2024
(51) Int. Cl.: F16C 29/00, F16C 29/12

(54) **BUSHING FOR A TELESCOPIC FRONT FORK OR A SHOCK ABSORBER**

(71) Applicant: Öhlins Racing AB, 194 27 Upplands Väsby (SE)
(72) Inventor: NORSTEDT, Rickard, 194 27 Upplands Väsby (SE); ÅSLUND, Pär, 194 27 Upplands Väsby (SE)
(74) Representative: AWA Sweden AB

(57) **Abstract**

A bushing (1) for arrangement between an inner part (21) and a surrounding part (22) of a telescopic front fork or of a shock absorber, the bushing (1) comprising: a body (11) adapted to be arranged in the surrounding part (22) and adapted with a through-hole (10) for receiving the inner part (21), the body (11) adapted to engage with a first part (22, 21) of the inner part (21) and the surrounding part (22); a first bushing portion (12a) adapted to engage with a second part (21, 22) of the inner part (21) and the surrounding part (22), wherein the body (11) is adapted in size and shape so that a body clearance (RC0) is provided between the body (11) and the second part (21, 22) when the bushing (1) is arranged between the inner part (21) and the surrounding part (22), and the first bushing portion (12a) is adapted in size and shape so that a first radial clearance (RCa) is provided between the first bushing portion (12a) and the first part (22, 21) when the bushing (1) is arranged between the inner part (21) and the surrounding part (22). A front fork comprising the same, a shock absorber comprising the same, and a method of manufacturing the bushing is also provided.

## Description

### Technical Field

The present disclosure relates to a bushing for a telescopic front fork or a shock absorber, a telescopic front fork comprising one or more of the same, a shock absorber comprising one or more of the same, and a method of manufacturing a bushing for a telescopic front fork or a shock absorber.

### Background

In suspension and damping applications, bushings are typically used to connect moving parts and/or to isolate parts from one another in vehicles to reduce transmission of vibrations and shocks from the road to the rest of the vehicle. For instance, a bushing may be arranged between two telescopically moveable parts in a front fork of a bicycle or motorbike. Bushings can also be used in shock absorbers, either between a piston rod and a tube of a shock absorber or between an inner tube and an outer tube of a shock absorber.

Design of bushings impacts transmission of vibrations and shocks from the road, which in turn impacts e.g., performance, ride comfort, noise, etc. Generally, it is of interest to adapt bushing design so that performance and ride comfort is maintained while noise is reduced. One conventional bushing design is an annular ring design. Moreover, bushings are generally designed to provide a low friction interface. This can as an example include a coating such as Teflon or include a lubricating material.

In the case of telescopically moveable parts, the bushings are conventionally arranged fixedly to a first telescopic part and enables movement of a second telescopic part along a telescopic axis. When an exterior load is exerted on the telescopic parts, these parts are caused to bend relative the telescopic axis, which thereby increases friction at an interface between the bushing and the second telescopic part or friction between the telescopic parts directly. One way of compensating for this it to design the bushing so that there is a sufficient clearance between the bushing and the second telescopic part. However, an increased clearance can also introduce noise. In the context of a telescopic front fork of a bicycle or a motorcycle, a too high clearance can give a rider a feeling that the front fork is too loosely fitted and thus not reliable.

Bushings may be further adapted in size and shape to allow for fluid communication between opposite ends of the bushing in case there is a need to enable fluid flow past the bushing. As an example, US2022411007 AA discloses in Figs. 28-29 a bushing having a typical annular ring design, which may have a split ring configuration with a small gap or split formed between adjacent ends of the ring. In addition, the bushing may have one or more reliefs formed on an interior surface of the bushing and optionally on an exterior surface of the bushing. The gap or reliefs provide a bushing flow pathway from one end of the bushing to the other, and allow for fluid communication from one end to the other. However, introducing the gap or reliefs also reduces the size of the interface between the bushing and the parts between which the bushing is arranged, which impacts to a degree how the bushing transmits vibrations and shocks from the road to the rest of the vehicle, which in turn can impact e.g., performance, vehicle comfort and noise etc.

In view of the above, it is of interest to provide an improved bushing for telescopic front forks or shock absorbers.

### Summary

It is an object of the present disclosure to provide an improved solution that alleviates the mentioned drawbacks with present solutions. A first object of the disclosure is to provide a bushing for a shock absorber. The first object is solved by the invention according to claim 1. Advantageous embodiments are summarized in the following.

The invention is based on the realization that a clearance in a telescopic front fork of a vehicle, such as a mountain bike, MTB, between a bushing and one of the telescopic members of the telescopic front fork can be critical for performance of the vehicle. A larger clearance decreases friction which is beneficial for improving fork performance during use so that handling and/or damping of the vehicle is improved. However, a downside with a larger clearance is that it introduces noise, which a rider can perceive as something being faulty and/or with low quality, and consequently result in reduced perceived reliability in such a fork, even if the fork overall has improved performance despite the introduced noise. This is in particular noticeable in MTB-forks as you don't have noise and/or vibrations, as with e.g., motorbike or automobiles, to mask the clearance or that the weight of the vehicle helps to keep the system pre-loaded to one extreme only.

The invention is further based on the realization that a bushing can be provided with one or more bushing portions, wherein said one or more bushing portions are adapted to engage with a second part of an inner part and a surrounding part of a telescopic arrangement, whereas a body of the bushing is adapted to engage with a first part of the inner part and the surrounding part. The bushing can thereby allow for clearances between said one or more bushing portions and the first part and between the body of the bushing and the second part respectively. By this, the bushing enables an increased clearance so as to reduce friction and increase performance but nonetheless substantially reduces a loose fitting of the telescopic parts so as to reduce noise generated. Moreover, by introducing one or more bushing portions in the bushing, which bushing portions may advantageously enable reduced stiffness for these portions, the stresses in these areas will not be high enough to create any permanent deformation. As such, the bushing can advantageously distribute bending forces more favorably.

Further, the bushing introduces a gradient in required force to go from one extreme to the other, thereby reducing the perception of the clearance. This allows for a larger diameter in the stiff area of the bushing, i.e., the body, thereby improving the performance. Advantageously, tuning of the stiffness of the bushing portion can be done by introducing one or more slots and/or one or more grooves. The bushing can advantageously be manufactured from a blank of a material, such as a metal, which is deformed into the desired shape wherein opposite ends are optionally joined together or merely maintained a distance from one another during assembly.

Moreover, the flexibility of the bushing moreover allows for sizing so as to reduce, preferably minimize, a deviation in actual diameter of the finished bushing compared to a desired diameter. Sizing can e.g., be provided by pressing a sizing tool, such as an oversized mandrel, through the bushing, which will permanently deform an inner diameter of a body of the bushing but avoid deforming one or more bushing portions of the bushing. The bushing portions, due to their flexibility, will be less inclined to permanently deform in response to a sizing tool being inserted, thereby allowing sizing of the body of the bushing to a desired inner diameter. The body may be provided with a material which enables deformation in response to the sizing. The body may be provided with a coating arranged on an inner surface of a through-hole of the bushing. The coating may be a low-friction coating. As a non-limiting example, the low-friction coating may be Teflon or any other suitable low-friction coating.

The bushing as herein disclosed can advantageously be used for all current MTB forks, so that no new tooling for outer tubes is necessary. As such, current MTB forks can be upgraded regardless of model or manufacture, thereby improving their performance. The bushing as herein disclosed can also be used for other telescopic arrangements or double tube arrangements, which are prevalent in a plurality of vehicles, such as shock absorbers or telescopic front forks.

According to a first aspect of the disclosure, a bushing for arrangement between an inner part and a surrounding part of a telescopic front fork or of a shock absorber is provided. The bushing comprises: a body extending along a longitudinal axis. The body is adapted to be arranged in the surrounding part and adapted with a through-hole for receiving the inner part. The body is adapted to engage with a first part of the inner part and the surrounding part. The bushing comprises: a first bushing portion extending from the body along the longitudinal axis. The first bushing portion is adapted to engage with a second part of the inner part and the surrounding part. The body is adapted in size and shape so that a body clearance is provided between the body and the second part when the bushing is arranged between the inner part and the surrounding part. The first bushing portion is adapted in size and shape so that a first radial clearance is provided between the first bushing portion and the first part when the bushing is arranged between the inner part and the surrounding part.

A bushing as described above, wherein the body is adapted to engage with the first part and the first bushing portion is adapted to engage with the second part, advantageously allows for a larger clearance so as to reduce friction and improve performance while reducing risk of noise being generated during use. Moreover, a bushing as described above advantageously distributes bending forces more effectively. Further, a bushing as described above advantageously facilitates sizing of an inner diameter without permanently deforming the bushing portion.

The body may be provided with a substantially cylindrical shape. The body may by provided with a cylinder as a shape. The body may have a body thickness being the difference between an outer radius and an inner radius. The body may substantially be provided with a constant body thickness. The body thickness may be substantially symmetric in a circumferential direction. The body thickness may be substantially constant in an axial direction.

By axial direction, it may be meant a direction parallel with the longitudinal axis. By axial end, it may be meant one end of the body along said longitudinal axis. The first bushing portion may extend a distance from the body in a first axial direction at least partially in parallel with the longitudinal axis. The bushing may comprise a second bushing portion adapted to extend a distance from the body in a second axial direction at least partially in parallel with the longitudinal axis. The first bushing portion and the second bushing portion are arranged on opposite axial ends of the body. The first bushing portion may taper in a direction from the body towards an axial end of the bushing. The second bushing portion may taper in a direction from the body towards another axial end of the bushing. As an alternative, the bushing portion may be provided between a first body portion and a second body portion.

By bushing portion, it may be meant a portion of the bushing having a reduced stiffness. A reduced stiffness may be enabled by one or more slots or one or more grooves. A reduced stiffness may be enabled by a reduced thickness for a bushing portion as compared with a body or body portion.

As one option, the body may be adapted to engage with the inner part of the inner part and the surrounding part whereas the first bushing portion is adapted to engage with the surrounding part of the inner part and the surrounding part.

By body adapted to engage with a first part, it may be meant that the body is abutting the first part at least when the inner part and/or the surrounding part are not subjected to a bending force. It may be meant that the body is fixedly attached to the first part. The body may be fixedly attached to the first part by means of an adhesive or by fastening elements or by being press-fitted.

By bushing portion adapted to engage with a second part, it may be meant that the bushing portion is abutting the second part when the inner part and/or the surrounding part are not subjected to a bending force. It may be meant that the bushing portion is placed at a distance from the second part when the inner part and/or the surrounding part are not subjected to a bending force and that the bushing portion is arranged to abut or come in contact with the second part when the inner part and/or the surrounding part are subjected to a bending force of sufficient magnitude and direction. It may be meant that the bushing portion enables relative movement with respect to the second part.

By bending force, it may be meant a force causing the inner part and/or the surrounding part to move relative each other so that a radial clearance at least locally is decreased. It may be meant a force causing the inner part and/or the surrounding part to deviate at least partially from a nominal state. A nominal state of the inner part and/or the surrounding part may be a state defined by how the inner part and the surrounding part where initially assembled. Preferably, the inner part and the surrounding part are assembled so as to be coaxially arranged.

The bushing may be adapted so that the body comprises an inner diameter which is larger or smaller than an inner diameter of one or more bushing portions. The bushing may be adapted so that the body comprises an outer diameter which is larger or smaller than an outer diameter of one or more bushing portions.

By an element extending along an axis, it may be meant that the element is at least partly extending in a direction parallel with said axis. Moreover, an element may at the same time extend in a direction orthogonal to said axis and/or extend in a direction in a circumferential axis.

A further advantage of the bushing according to the first aspect is that is allows for better performance using the currently obtained tolerance chains. When elements are assembled, size deviations and geometrical deviations of the respective elements accumulate which can cause interference, thereby increasing friction. Thus, the tolerances of any elements depends on a maximum allowable accumulation of tolerances or tolerance chain. For telescopic arrangements, such as telescopic front forks for a bicycle, the tolerance chain is typically strict so as not to impair the telescopic movement of the bicycle front fork or the performance thereof. One such aspect is how parallel the inner part and the surrounding part are after assembly. The bushing according to the first aspect alleviates this at least partly by means of the bushing portion, the body clearance and the first radial clearance, which allows the bushing to provide both support and flexibility. As a result, the elements of the telescopic arrangement may be provided with lower friction. Moreover, a further advantage of the bushing according to the first aspect is that by arranging a pair of such bushings between the surrounding member and the inner member, by their flexible yet supportive design, facilitates achieving and maintaining the surrounding member and the inner manner in a parallel and coaxial manner within tolerance limits which otherwise is difficult to control.

According to one embodiment, the bushing comprises a second bushing portion extending from the body along the longitudinal axis at an opposite side of the body than the first bushing portion, wherein the second bushing portion is adapted to engage with the second part of the inner part and the surrounding part, and the second bushing portion is adapted in size and shape so that a second radial clearance is provided between the second bushing portion and the first part when the bushing is arranged between the inner part and the surrounding part. The second bushing portion may be substantially identical in size and shape as the first bushing portion. By having two bushing portions, the bushing may advantageously enable improved distribution of forces.

According to one embodiment, the first bushing portion and/or the second bushing portion is adapted with a lower stiffness than the body. The first bushing portion and/or the second bushing portion may be adapted with a lower stiffness than the body by being provided to radially flex during use. The first bushing portion and/or the second bushing portion may be adapted to flex radially into spaces associated with radial clearances. The stiffness of the first bushing portion and/or the second bushing portion may be adapted by incorporating one or more slots or one or more grooves. The stiffness of the first bushing portion and/or the second bushing portion may be adapted by having a smaller thickness. The stiffness of the first bushing portion and/or the second bushing portion may be adapted by being provided in a different material than the body which different material for the same thickness as the thickness of the body is characterized by a reduced stiffness. The body and the first bushing portion and/or the second bushing portion may be assembled together by one or more fastening means or joined together by means of heating or by means of an adhesive.

According to one embodiment, the first bushing portion and/or the second bushing portion is adapted with one or more longitudinal slots and/or one or more inner grooves extending in a longitudinal direction, or wherein the first portion and/or the second bushing portion are adapted without any longitudinal slots, seams, or groves. By slot, it may be meant an opening extending through an element in at least one direction, such as a radial direction. The one or more slots may be characterized by a width and a longitudinal length. By groove, it may be meant a recess. The one or more grooves may be characterized by a width, a longitudinal length, and a depth. The one or more slots or grooves may extend at least in a circumferential direction so as to be a spiral slot/groove or the like. The first bushing portion and/or the second bushing portion may comprise one slot and/or groove, or two, three, four, five, six, seven, eight, nine, ten or more slots and/or grooves. One or more slots and/or grooves may be adapted to enable fluid communication between two axial sides of the bushing.

According to one embodiment, a portion of the body tapers in a direction toward the first bushing portion and/or the second bushing portion. The body may comprise a center ring portion from which the body tapers towards the first bushing portion and/or the second bushing portion. The first bushing portion and/or the second bushing portion may taper in an axial direction away from or toward the body.

According to one embodiment, the bushing comprises an inner low friction interface located on an inside of the bushing and/or an outer low friction interface located on an outside of the bushing, wherein the inner low friction interface and/or the outer low friction interface is provided by a plastic material such as Teflon.

According to one embodiment, the first bushing portion and/or the second bushing portion is adapted with a thickness substantially equal to or smaller than a thickness of the body. By thickness, it may be meant a radial extension between an inner side of the bushing body or bushing portion concerned to an outer side of the bushing body or bushing portion concerned. Along said radial extension, the bushing body and/or the bushing portion concerned may be adapted to comprise at least a main material and an optional additional material to provide a low friction interface. The main material may be a metal-based material or a plastic-based material. The optional additional material may be a metal-based material or a plastic-based material. As non-limiting examples, metal-based material may be stainless steel or aluminum or any other suitable metal alloy. As non-limiting examples, plastic-based material may be any suitable plastic, such as Teflon.

The thickness of the first bushing portion and/or the second bushing portion may be in an interval of 10-100% of the body, or 10-20%, 20-30%, 30-40%, 40-50%, 50-60%, 60-70%, 70-80%, 80-90%, 90-100% or in an interval combined by any of above intervals. A smaller thickness advantageously allows for a reduced stiffness of the first bushing portion and/or the second bushing portion. The bushing may be adapted for a telescopic front fork. As a non-limiting example, the body may have a body thickness of 5 mm and an inner diameter of 38 mm. As a non-limiting example, the first bushing portion and/or the second bushing portion may thereby be adapted with a thickness of 0.5-5 mm. As a non-limiting example, the body of the bushing may be 10-50 mm in longitudinal length. As a non-limiting example, the first bushing portion and/or the second bushing portion may be 5-10 mm in longitudinal length. The dimensions of the bushing however is not limited as such and can be selected depending on application.

According to one embodiment, the bushing is adapted as a single part. The bushing may then advantageously be formed by plastic molding, metal casting, metal stamping, etc., depending on material choice of the bushing. By being adapted as a single part, manufacturing thereof is simplified which is advantageous from a cost perspective. Moreover, it is advantageous for mass production.

According to one embodiment, the first bushing portion and/or a second bushing portion is adapted with a nominal inner diameter substantially equal to the outer diameter of the inner part or a nominal outer diameter substantially equal to the inner diameter of the surrounding part. By nominal inner/outer diameter, it may be meant the inner/outer diameter as originally manufactured. The bushing may thereby further facilitate distribution of forces in a desired manner.

According to one embodiment, the bushing is adapted to engage with the inner part and the surrounding part so that the first part is the surrounding part and the second part is the inner part wherein the radial clearance is provided between the first bushing portion and the surrounding part, or the first part is the inner part and the second part is the surrounding part wherein the radial clearance is provided between the first bushing portion and the inner part. Thereby, the bushing is not limited in terms of which part of the inner part and the surrounding part the bushing is adapted to engage with via the body. The bushing advantageously enables two different configurations, which may be respectively preferable depending on internal design of the inner part and the surrounding part.

According to one embodiment, the bushing is adapted for a telescopic front fork, wherein the surrounding part is an outer tube and the inner part is an inner tube, or a shock absorber, wherein the surrounding part is an outer tube and the inner part is a piston rod or an inner tube.

According to one embodiment, the bushing is provided in a plastic material, or a metal material, such as aluminum, steel, or the like, preferably formed by a blank of said metal material. By blank of said metal material, it may be meant a substantially planar piece of said material. The bushing may be formed from a blank of said material by e.g., metal stamping.

According to one embodiment, the first bushing portion and/or the second bushing portion is provided with a coating to reduce friction with the second part.

According to one embodiment, the bushing is provided with a low friction interface. The bushing may comprise said low friction interface. The low friction interface may be on an inside of the bushing and/or on an outside of the bushing. The low friction interface may be provided by means of a coating such as Teflon. The low friction interface may include a lubricating material.

According to one embodiment, the body is adapted to engage fixedly with the first part by means of press-fitting and/or an adhesive. A plurality of adhesives are available to use for this purpose. As non-limiting examples, polyurethane-based, silicone-based adhesives, acrylic-based, or epoxy-based adhesives can be used.

According to a second aspect, a telescopic front fork for a bicycle or a motorbike is provided. The telescopic front fork comprises an outer tube and an inner tube, and one or more bushings according to the first aspect or any embodiments thereof arranged between the outer tube and the inner tube. The telescopic front fork may comprise two or more bushings arranged in one or in each telescopic leg of the telescopic front fork. By providing two or more bushings at an axial distance from one another, forces can advantageously be distributed more efficiently. Moreover, in the case of two or more bushings, at least two bushings are oriented in opposite axial directions, for instance, a first bushing portion of each bushing may be oriented towards each other or away from each other.

According to a third aspect, a shock absorber for a vehicle is provided. The shock absorber comprises an outer tube and an inner tube, and one or more bushings according to the first aspect or any embodiments thereof arranged between the outer tube and the inner tube, or a tube and a piston rod, and one or more bushings according to the first aspect or any embodiments thereof arranged between the tube and the piston rod.

According to a fourth aspect, a method of manufacturing a bushing is provided. The method comprises a step of providing a bushing material. The method comprises a step of manufacturing a bushing element from said bushing material, the bushing element comprising: a body extending along a longitudinal axis, the body adapted with a through-hole with a first inner surface at a first inner diameter and optionally a second inner surface at a second inner diameter larger than the first inner diameter, and a first bushing portion extending from the body along the longitudinal axis. The method comprises a step of adapting the bushing element in size and shape so as to provide the bushing according to the first aspect or any embodiments thereof.

Optionally, the step of manufacturing a bushing element from said bushing material comprises one of, or a combination of, the following manufacturing processes: injection molding, casting, machining, pressing, and forming. These manufacturing processes are non-limiting examples and the bushing element and/or the bushing may be manufactured by other manufacturing process or specific types of manufacturing process of the ones listed above.

According to one embodiment, the step of adapting the bushing element in size and shape so as to provide the bushing according to the first aspect or any embodiments thereof comprises a step of inserting a sizing tool into the bushing element so as to increase an inner diameter of the first inner surface from the first inner diameter to a first post-sizing inner diameter, whereby one or more bushing portions of the bushing element are subjected to elastic deformation and the first inner surface is subjected to plastic deformation so as to increase the first inner diameter to the first post-sizing inner diameter. By this, geometric variations of the first inner surface and the optional second inner surface may be reduced.

Optionally, said step of inserting the sizing tool is performed after or before assembly of the bushing between the inner part and the surrounding part. The bushing element may be subjected to sizing after manufacturing but before assembly of the bushing between the inner part and the surrounding part. The bushing element may be subjected to sizing after manufacturing and after assembly of the bushing element between the inner part and the surrounding part. This may further reduce geometric variations of the first inner surface and the optional second inner surface.

Optionally, said step of adapting the bushing element in size and shape so as to provide the bushing according to the first aspect or any embodiments thereof comprises a step of providing a coating, such as a low friction coating, on an inside of the bushing element, so that said first inner surface and optionally said second inner surface is provided by said coating. As non-limiting examples, the low friction coating may include Teflon and/or a lubrication fluid. The low friction coating may be selected and/or adapted so that that it deforms more easily than a main material of the bushing.

The bushing can be sized before assembly or after assembly of the bushing element between the inner part and the surrounding part. The bushing element may be adapted with one or more bushing elements as herein disclosed. The bushing element may be adapted to be susceptible to plastic deformation. Thus, when inserting a sizing tool to size the bushing, the one or more bushing portions are subjected to plastic deformation, whereas an inner surface of the body of the bushing element is subjected to permanent deformation in response to insertion of the sizing tool. Thus, the difference in inner diameter may be conveniently be provided by a sizing step, so that the bushing is adapted in size and shape to provide flexibility so as to distributing stresses arising due to, e.g., bending forces while also providing good support between the inner part and the surrounding part.

An advantage of performing the sizing step after assembly of the bushing element between the inner part and the surrounding part is that it may provide a more even inner diameter of the body. Moreover, an advantage of performing the sizing step after assembly of the bushing element between the inner part and the surrounding part is that it may limit a distribution of difference in inner diameter of the body and inner diameter of the one or more bushing portions.

Moreover, the bushing element may be adapted so that the body has an initial inner diameter which is smaller than an inner diameter of the one or more bushing portions. Thus, upon inserting the sizing tool, the inner diameter of the bushing may be subjected to more plastic deformation, thereby increasing the chance of permanent deformation, than the one or more bushing portions. As a result, the bushing element may adapted so as to provide a bushing according to the first aspect or any embodiments thereof.

Alternatively, the bushing element may be adapted with one or more materials as herein disclosed and/or one or more thicknesses and/or one or more longitudinal lengths. As an non-limiting example, the bushing element may comprise and/or provide an inner low friction interface which is adapted to permanently deform I response to insertion of the sizing tool. However, due to the flexibility of the one or more bushing portions, permanent deformation of the low friction interface at an inner surface of the one or more bushing portions may be reduced relative the low friction interface at an inner surface of the body, which is less flexible. Thereby, a difference in inner diameter of the body and of the one or more bushing portions is achievable. An advantage of this is that the bushing element may be adapted with a very simple shape, thereby reducing manufacturing cost.

Effect and features of the second, third and fourth aspects are largely analogous to those described above in connection with the first aspect. Embodiments mentioned in relation to the first aspect are largely compatible with the second, third, and fourth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "incorporating" and similar wordings do not exclude other elements or steps.

### Brief Description of the Drawings

The invention will in the following be described in more detail with reference to the enclosed drawings, wherein:
Fig. 1 shows a cross-sectional side view of a bushing 1 according to one embodiment of the disclosure when arranged between an inner part 21 and a surrounding part 22 of a telescopic front fork or of a shock absorber;
Fig. 2a shows a perspective view of a bushing according to one embodiment of the disclosure;
Fig. 2b shows a side view of a bushing according to one embodiment of the disclosure;
Fig. 2c shows a cross-sectional side view of a bushing according to one embodiment of the disclosure;
Fig. 3a shows a cross-sectional side view of a bushing according to one embodiment of the disclosure when arranged in a surrounding part of a telescopic front fork or of a shock absorber;
Fig. 3b shows a cross-sectional side view of a bushing according to one embodiment of the disclosure when arranged between an inner part and a surrounding part of a telescopic front fork or of a shock absorber;
Fig. 4a shows a cross-sectional side view of a bushing according to one embodiment of the disclosure when arranged in a surrounding part of a telescopic front fork or of a shock absorber;
Fig. 4b shows a cross-sectional side view of a bushing according to one embodiment of the disclosure when arranged between an inner part and a surrounding part of a telescopic front fork or of a shock absorber;
Fig. 5a shows a perspective view of a bushing according to one embodiment of the disclosure;
Fig. 5b shows a top view of a bushing according to one embodiment of the disclosure;
Fig. 6a shows a side view of a bushing according to one embodiment of the disclosure;
Fig. 6b shows a cross-sectional side view of a bushing according to one embodiment of the disclosure;
Fig. 7a shows a perspective view of a bushing according to one embodiment of the disclosure;
Fig. 7b shows a top view of a bushing according to one embodiment of the disclosure;
Fig. 8a shows a side view of a bushing according to one embodiment of the disclosure;
Fig. 8b shows a cross-sectional side view of a bushing according to one embodiment of the disclosure;
Fig. 9a shows a perspective view of a bushing according to one embodiment of the disclosure;
Fig. 9b shows a side view of a bushing according to one embodiment of the disclosure;
Fig. 9c shows a cross-sectional side view of a bushing according to one embodiment of the disclosure;
Fig. 10a shows a perspective view of a bushing according to one embodiment of the disclosure;
Fig. 10b shows a side view of a bushing according to one embodiment of the disclosure;
Fig. 10c shows a cross-sectional side view of a bushing according to one embodiment of the disclosure;
Fig. 11 shows a perspective view of a telescopic front fork according to one embodiment of the disclosure;
Fig. 12a shows a front view of a telescopic front fork according to one embodiment of the disclosure;
Fig. 12b shows a partially cross-sectional front view of a telescopic front fork according to one embodiment of the disclosure;
Fig. 13a shows a side view of a telescopic front fork according to one embodiment of the disclosure;
Fig. 13b shows a cross-sectional rear view of a telescopic front fork according to one embodiment of the disclosure;
Fig. 14a shows a cross-sectional side view of two bushings according to one embodiment of the disclosure arranged between an inner part and a surrounding part of a telescopic front fork or of a shock absorber;
Fig. 14b shows a cross-sectional side view of a bushing according to one embodiment of the disclosure when arranged between an inner part and a surrounding part of a telescopic front fork or of a shock absorber;
Fig. 15a shows a cross-sectional side view of two bushings according to one embodiment of the disclosure arranged between an inner part and a surrounding part of a telescopic front fork or of a shock absorber;
Fig. 15b shows a cross-sectional side view of a bushing according to one embodiment of the disclosure when arranged between an inner part and a surrounding part of a telescopic front fork or of a shock absorber;
Fig. 16a shows a cross-sectional side view of two bushings according to one embodiment of the disclosure arranged between an inner part and a surrounding part of a telescopic front fork or of a shock absorber;
Fig. 16b shows a cross-sectional side view of a bushing according to one embodiment of the disclosure when arranged between an inner part and a surrounding part of a telescopic front fork or of a shock absorber;
Fig. 17a shows a cross-sectional side view of a bushing according to one embodiment of the disclosure arranged between an inner part and a surrounding part of a telescopic front fork or of a shock absorber;
Fig. 17b shows a cross-sectional side view of a bushing according to one embodiment of the disclosure when arranged between an inner part and a surrounding part of a telescopic front fork or of a shock absorber;
Fig. 18a shows a cross-sectional side view of a bushing according to one embodiment of the disclosure arranged between a piston rod and cylinder of a shock absorber;
Fig. 18b shows a cross-sectional side view of a bushing according to one embodiment of the disclosure arranged between a piston rod and cylinder of a shock absorber;
Fig. 19 shows a schematic illustration of a shock absorber comprising a bushing according to one embodiment of the disclosure;
Fig. 20 illustrates a flow chart of a method of manufacturing a bushing according to one embodiment of the disclosure.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

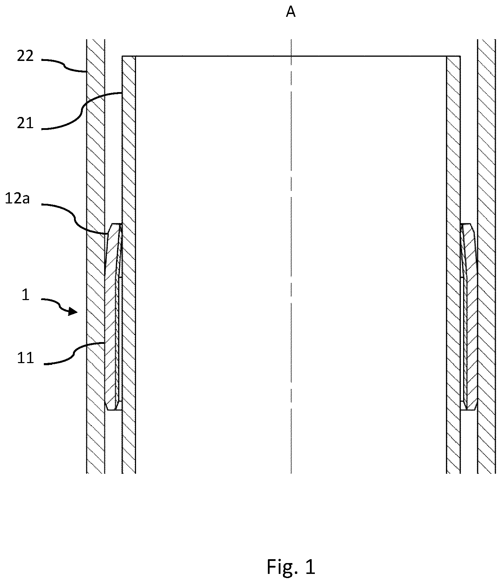

Fig. 1 shows a bushing 1 adapted for arrangement between an inner part 21 and a surrounding part 22 of a telescopic front fork or of a shock absorber. Generally, the surrounding part 22 extends along an axis A and forms an interior space. For instance, the surrounding part 22 may be adapted with a generally cylindrical geometry. Generally, the inner part 21 extends along an axis A. For instance, the inner part 21 may be adapted with a generally cylindrical geometry. The bushing 1 comprises a body 11 extending along a longitudinal axis A. The bushing 1 is adapted to be arranged in the surrounding part 22. The body 11 is adapted with a through-hole 10 for receiving the inner part 21. The body 11 is adapted to engage with a first part 22, 21 of the inner part 21 and the surrounding part 22. The first part may be the surrounding part 22. As an alternative, the first part may be the inner part 21. The bushing 1 further comprises a first bushing portion 12a. The first bushing portion 12a extends from the body 11 along the longitudinal axis A. The first bushing portion 12a is adapted to engage with a second part 21, 22 of the inner part 21 and the surrounding part 22. The second part may be the inner part 21. As an alternative, the second part may be the surrounding part 22. The body 11 is adapted in size and shape so that a body clearance RC0 is provided between the body 11 and the second part 21, 22 when the bushing 1 is arranged between the inner part 21 and the surrounding part 22. The first bushing portion 12a is adapted in size and shape so that a first radial clearance RCa is provided between the first bushing portion 12a and the first part 22, 21 when the bushing 1 is arranged between the inner part 21 and the surrounding part 22.

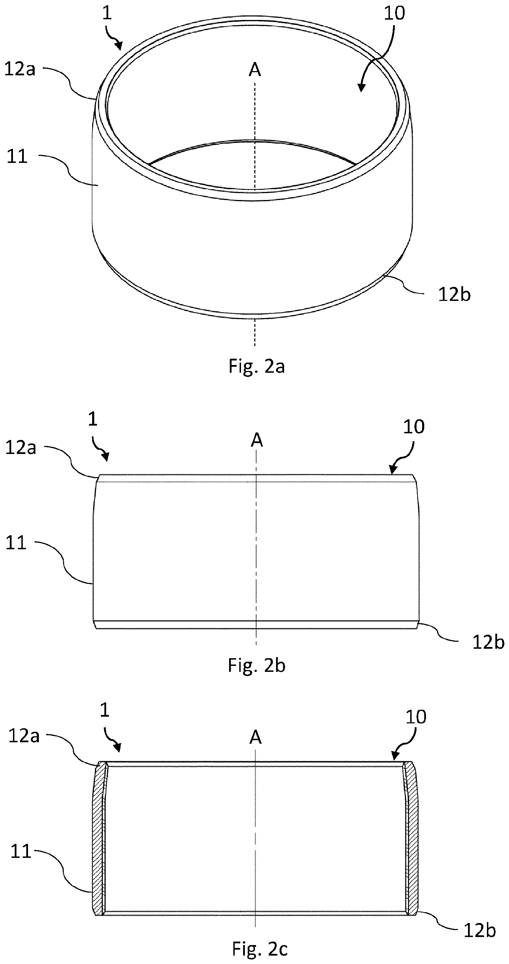

As exemplified in Figs. 2a-2c, the bushing 1 is adapted with a cylindrical shape. The bushing is adapted with radial extension between an inner side of the bushing to an outer side of the bushing. This radial extension may be referred to as thickness. The body 11 may thus be attributed with a thickness. The bushing portion may be attributed with a thickness. The body 11 of the bushing 1 has a bushing thickness much smaller than an outer diameter of the body 11. The outer diameter of the body 11 may be equal to x times the bushing thickness, wherein x is selected in an interval of 10 to 100 or more. The body 11 is in Figs 1a-1c exemplified with an outer diameter of the body 11 being substantially equal to 25 times the bushing thickness. However, the bushing 1 is not limited as such and may be adapted with other ratios between outer diameter and bushing thickness depending on application and desired effect.

Moreover, along said radial extension, the body 11 and/or the first bushing portion 12a and/or an optional second bushing portion 12b may be adapted to comprise at least a main material and an optional additional material to provide a low friction interface. The main material may be a metal-based material or a plastic-based material. The optional additional material may be a metal-based material or a plastic-based material. As non-limiting examples, metal-based material may be stainless steel or aluminum or any other suitable metal alloy. As non-limiting examples, plastic-based material may be any suitable plastic, such as Teflon. If provided on an inside of the bushing 1, the optional additional material may be deformable so as to be able to provide a first inner diameter in a first axial interval of the bushing 1 and a second inner diameter different from the first inner diameter in a second axial interval of the bushing 1 different from the first axial interval.

As exemplified in Figs. 2a-2c, the bushing 1 is adapted with an elongated shape. An elongated extension of the bushing 1 may be equal to y times the bushing thickness, wherein y is selected in an interval of 5 to 200 or more. The bushing 1 is in Figs. 2a-2c exemplified with an elongated extension which is substantially equal to 10 times the bushing thickness. The elongated extension of the bushing 1 is provided by an elongated extension of the body 11 and by an elongated extension of the first bushing portion 12a and an elongated extension of an optional second bushing portion 12b. The elongated extension of the first bushing portion 12a may e.g., contribute 5%-45% of the elongated extension of the bushing 1. The elongated extension of the second bushing portion 12b may e.g., contribute 5%-45% of the elongated extension of the bushing 1. The bushing 1 is however not limited as such and may be adapted with other configurations.

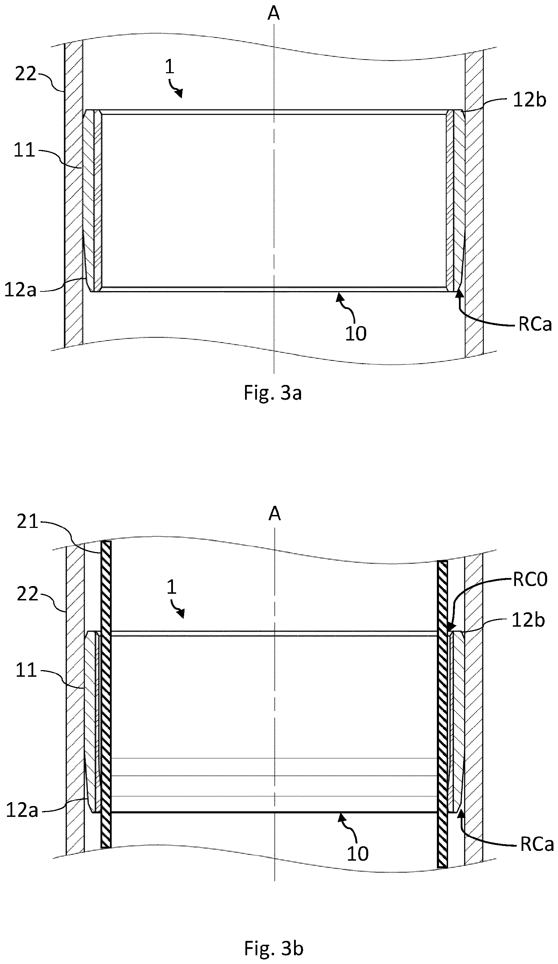

Fig. 3a shows a cross-sectional side view of a bushing 1 according to one embodiment of the disclosure when arranged in a surrounding part 22 of a telescopic front fork or of a shock absorber. Fig. 3b shows a cross-sectional side view of a bushing 1 according to one embodiment of the disclosure when arranged between an inner part 21 and a surrounding part 22 of a telescopic front fork or of a shock absorber. In this embodiment, the bushing 1 is adapted so that the body 11 is adapted to engage with the surrounding part 22. Moreover, the bushing 1 is adapted so that the first bushing portion 12a is adapted to engage with the inner part 21. A body clearance RC0 is provided between the inner part 21 and the body 11. A first radial clearance Rca is provided between the first bushing portion 12a and the surrounding part 22.

The bushing 1 may thereby be adapted so as to provide a smaller inner diameter proximate the first bushing portion 12a than a body inner diameter of the body 11. This difference in inner diameter of the bushing may e.g., be provided by means of inserting a sizing tool into the bushing to increase the inner diameter from a first inner diameter to a second inner diameter. As shown in in Fig. 3b, an inner diameter of the body 11 has been increased compared to Fig. 3a. This increase in diameter is caused by an inner surface of the body being deformed when a sizing tool in inserted. The first bushing portion 12a is however flexible due to its design and thereby flexes radially outward when the sizing tool is inserted through the bushing 1. As a consequence, an inner surface of the first bushing portion 12a is less inclined to be deformed, and thus is enabled to engage with the inner part 21. The bushing 1 may be adapted with a coating on an inner side thereof. The coating may be a low-friction coating, such as Teflon. In the context of the application, the bushing 1 may comprise a material as previously explained and a coating located on the inner surface thereof. The coating may be adapted to deform in response to the sizing tool when inserted into the bushing 1.

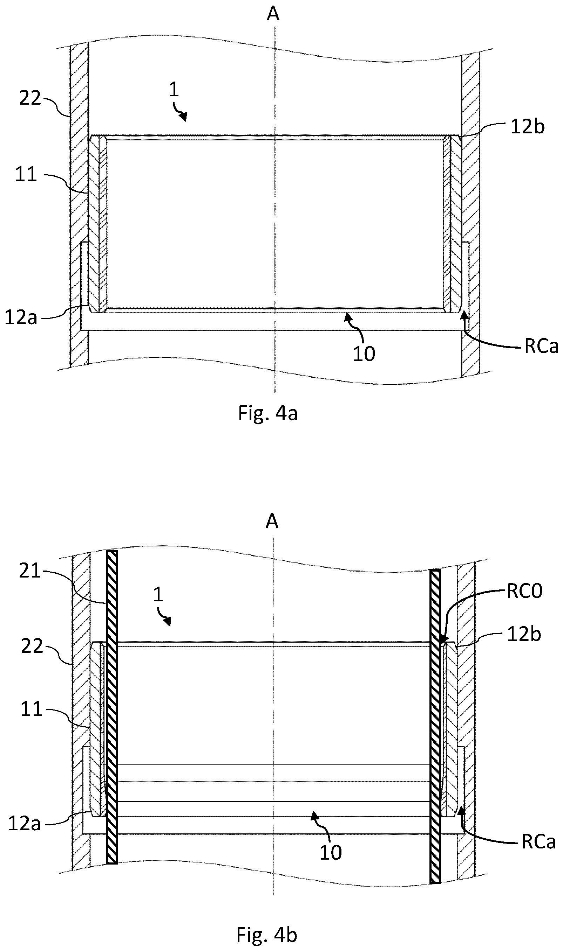

Fig. 4a shows a cross-sectional side view of a bushing 1 according to one embodiment of the disclosure when arranged in a surrounding part 22 of a telescopic front fork or of a shock absorber. Fig. 4b shows a cross-sectional side view of a bushing 1 according to one embodiment of the disclosure when arranged between an inner part 21 and a surrounding part 22 of a telescopic front fork or of a shock absorber. The surrounding part 22 is adapted with a circumferentially extending slot. The bushing 1 is adapted to be arranged so that the first bushing portion 12a is arranged to flex into the circumferentially extending slot of the surrounding part 22. Contrary to the embodiment exemplified in Fig. 3a-3b, which comprises a first bushing portion 12a having an outside diameter which tapers towards an axial end of the bushing, the embodiment exemplified in Figs. 4a-4b comprises a first bushing portion 12a having an outside diameter which is substantially constant towards an axial end of the bushing.

Moreover, the bushing 1 may be adapted so as to provide a smaller inner diameter proximate the first bushing portion 12a than a body inner diameter of the body 11. This difference in inner diameter of the bushing may e.g., be provided by means of inserting a sizing tool into the bushing to increase the inner diameter from a first inner diameter to a second inner diameter. As shown in in Fig. 4b, an inner diameter of the body 11 has been increased compared to Fig. 4a. This increase in diameter is caused by an inner surface of the body being deformed when a sizing tool in inserted. The first bushing portion 12a is however flexible due to its design and thereby flexes radially outward when the sizing tool is inserted through the bushing 1. As a consequence, an inner surface of the first bushing portion 12a is less inclined to be deformed, and thus is enabled to engage with the inner part 21. The bushing 1 may comprise a low friction interface, such as a coating. The bushing 1 may be adapted with a coating on an inner side thereof. The coating may be a low-friction coating, such as Teflon. In the context of the application, the bushing 1 may comprise a material as previously explained and a coating located on the inner surface thereof. The coating may be adapted to deform in response to the sizing tool when inserted into the bushing 1.

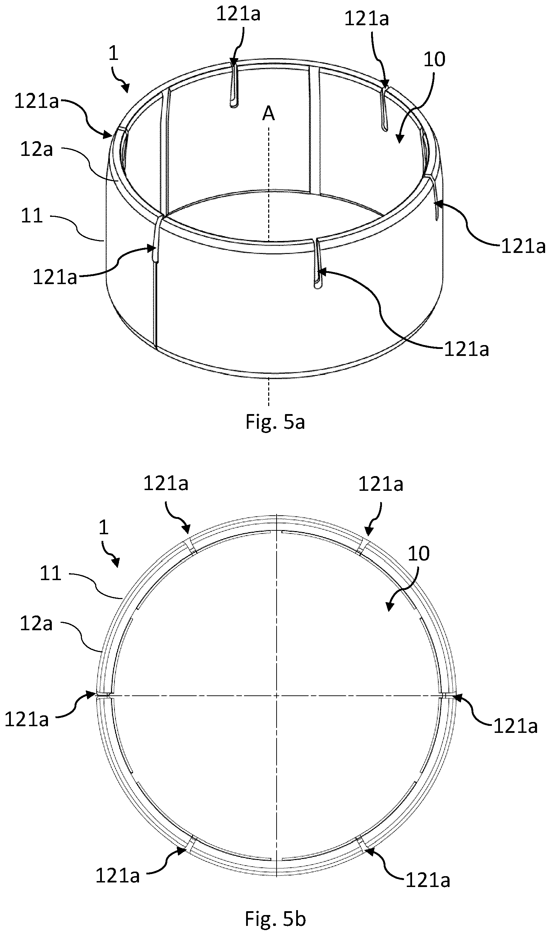

Fig. 5a shows a perspective view of a bushing 1 according to one embodiment of the disclosure. Fig. 5b shows a top view of a bushing 1 according to one embodiment of the disclosure. The bushing 1 comprises at least one slot 121a extending axially from a first axial end into the first bushing portion 12a. The bushing 1 may comprise any number of slots, e.g., at least one slot or any number of slots, e.g., 1-N, wherein N is an any integer number larger than one. The bushing 1 in Figs. 5a-5b is exemplified to comprise six slots extending from a first axial end into the first bushing portion 12a. The slots 121a may, depending on number, be arranged substantially symmetrically about the axial axis A.

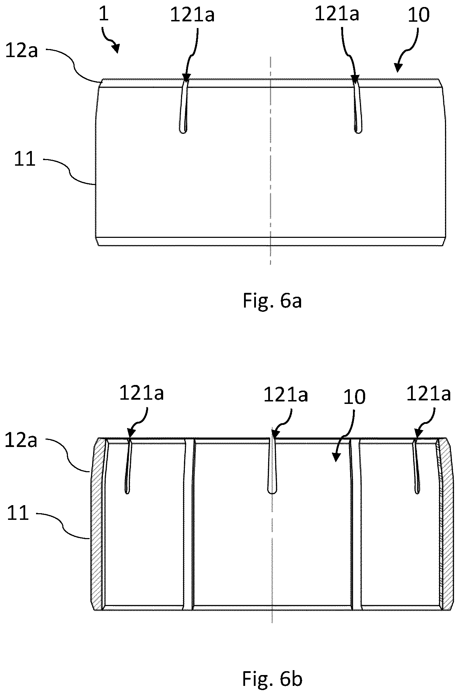

Fig. 6a shows a side view of a bushing 1 according to one embodiment of the disclosure. Fig. 6b shows a cross-sectional side view of a bushing 1 according to one embodiment of the disclosure. The bushing 1 is exemplified to comprise at least one slot 121a extending axially from a first axial end into the first bushing portion 12a. The slots 121a may, depending on number, be arranged substantially symmetrically about the axial axis A. The bushing 1 in Figs. 6a-6b is exemplified to comprise six slots extending from a first axial end into the first bushing portion 12a, wherein only a sub-collection of said slots are visible.

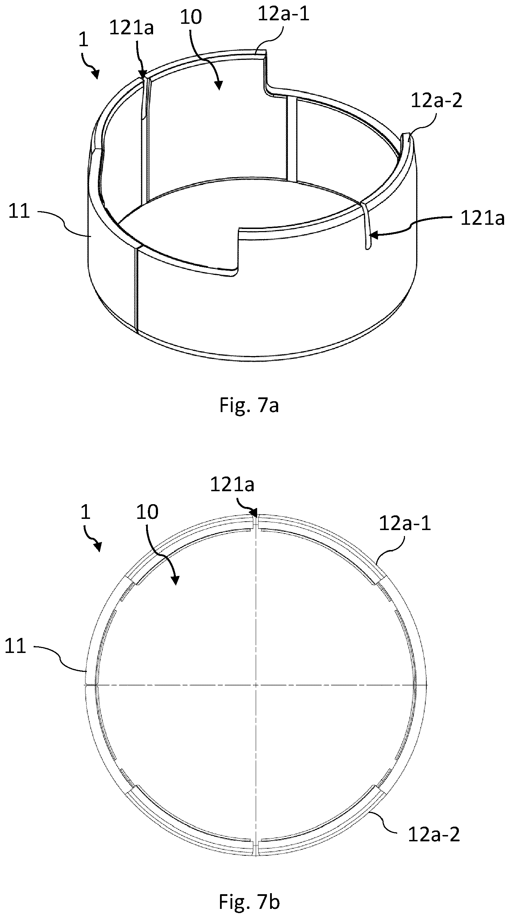

Fig. 7a shows a perspective view of a bushing 1 according to one embodiment of the disclosure. Fig. 7b shows a top view of a bushing 1 according to one embodiment of the disclosure. The first bushing portion 12a is separated into a first sub-portion 12a-1 and a second sub-portion 12a-2. The first sub-portion 12a-1 and the second sub-portion 12a-2 are arranged symmetrically about a first axial end of the body 11. The first sub-portion 12a-1 and the second sub-portion 12a-2 each substantially extend in a circumferential direction from the body 11, preferably about 90 degrees in a circumferential direction. However, the first sub-portion 12a-1 and the second sub-portion 12a-2 are not limited as such and can be adapted to extend other distances in a circumferential direction. As an example, either or both of the first sub-portion 12a-1 and the second sub-portion 12a-2 can extend x degrees in a circumferential direction, wherein x is in an interval of 45-180, preferably 75-105. As exemplified in the embodiment of Figs. 7a-7b, a slot 121a may be arranged in the first sub-portion 12a-1 and/or the second sub-portion 12a-2.

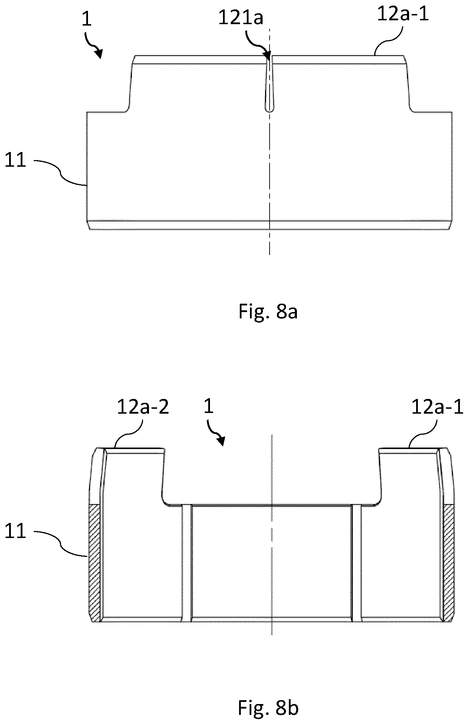

Fig. 8a shows a side view of a bushing 1 according to one embodiment of the disclosure. Fig. 8b shows a cross-sectional side view of a bushing 1 according to one embodiment of the disclosure. The first bushing portion 12a is separated into a first sub-portion 12a-1 and a second sub-portion 12a-2. The first sub-portion 12a-1 and the second sub-portion 12a-2 are substantially provided at opposite sides of one axial end of the body 11 of the bushing 1.

As illustrated in Figs. 7a-7b and 8a-8b, the first sub-portion 12a-1 and the second sub-portion 12a-2 are separated by a first recess and a second recess. The first recess and the second recess extend from a common circumferential line of the first sub-portion 12a-1 and the second sub-portion 12a-2 in an axial direction substantially to the body 11 of the bushing 1. By this, the bushing 1 provides two oppositely acting bushing portions. By separating the first sub-portion 12a-1 and the second sub-portion 12a-2, the first sub-portion 12a-1 and the second sub-portion 12a-2 are facilitated to flex in response to bending forces acting on the inner part or the surrounding part.

Albeit the Figs. 7a-7b and Figs. 8a-8b illustrate the first sub-portion 12a-1 and the second sub-portion 12a-2 to be substantially separated from one another, the invention is however not limited as such, rather the first bushing portion 12a may be provided with one or more recesses or slots or the like which at least partly or wholly separate the first bushing 12a into two or more sub-portions. Moreover, the first bushing portion 12a may be divided into a plurality of sub-portions, for instance, two, three, four, five, six, or more. The respective sub-portions may be substantially equal in size. The respective sub-portions may be substantially symmetrically arranged at an axial end of the bushing 1. Moreover, a second bushing portion may be adapted as described with regards to any of the embodiments of the first bushing portion.

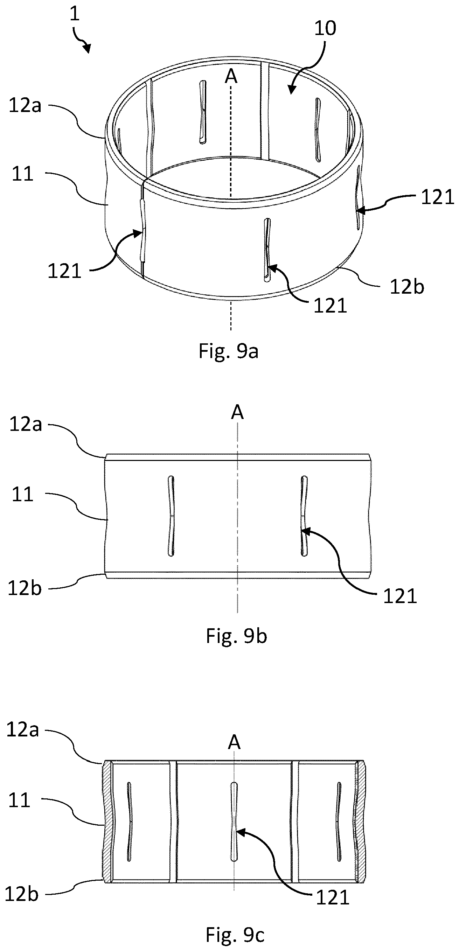

Fig. 9a shows a perspective view of a bushing 1 according to one embodiment of the disclosure. Fig. 9b shows a side view of a bushing 1 according to one embodiment of the disclosure. Fig. 9c shows a cross-sectional side view of a bushing 1 according to one embodiment of the disclosure. The body 11 of the bushing 1 is adapted to engage with the inner part. The bushing 1 is adapted with a first bushing portion 12a and a second bushing portion 12b. The first bushing portion 12a and the second bushing portion 12b are adapted to engage with the surrounding part. The body 11 is adapted with six slots 121. The six slots 121 are provided to extend axially in the body 11.

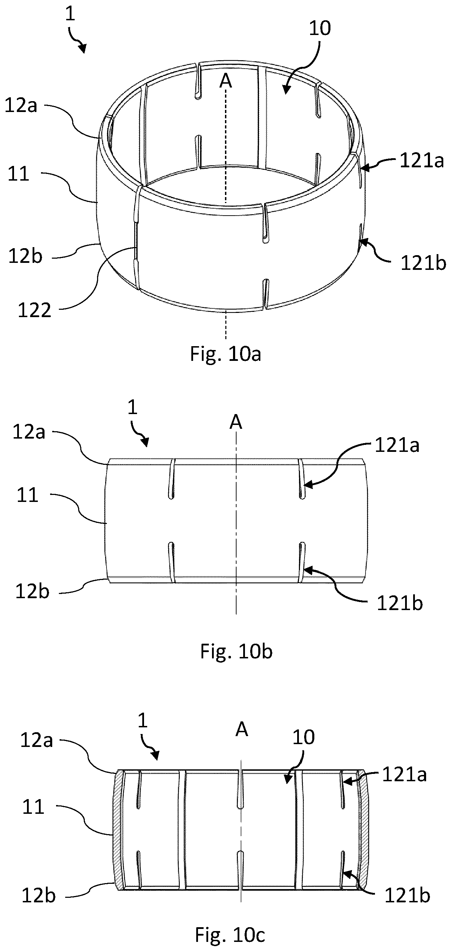

Fig. 10a shows a perspective view of a bushing 1 according to one embodiment of the disclosure. Fig. 10b shows a side view of a bushing 1 according to one embodiment of the disclosure. Fig. 10c shows a cross-sectional side view of a bushing 1 according to one embodiment of the disclosure. The body 11 is adapted to engage with the surrounding part. The bushing 1 is adapted with a first bushing portion 12a and a second bushing portion 12b. The first bushing portion 12a and the second bushing portion are adapted to engage with the inner part. The bushing 1 is adapted with a plurality of slots 121a, 121b. Slots 121a are provided in the first bushing portion 12a, preferably extending axially towards the body 11, optionally to the body 11. Slots 121b are provided in the second bushing portion 12b, preferably extending axially towards the body 11, optionally to the body 11.

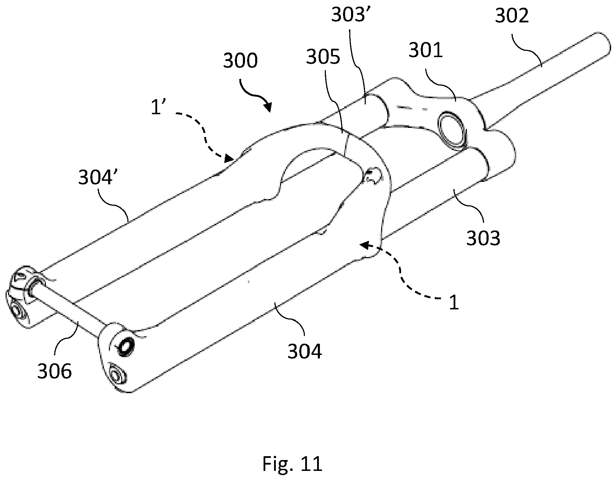

Fig. 11 shows a perspective view of a telescopic front fork 300 according to one embodiment of the disclosure. The telescopic front fork 300 comprises a crown 301. The telescopic front fork 300 comprises a steerer tube 302. The steerer tube 302 is attached to the crown 301. The telescopic front fork 300 comprises a first stanchion 303 and a second stanchion 303'. The first stanchion 303 and the second stanchion 303' are attached to the crown 301. The telescopic front fork comprises a first lower 304 and a second lower 304'. The first stanchion 303 is adapted to be inserted into the first lower 304. The second stanchion 303' is adapted to be inserted into the second lower 304'. The telescopic front fork comprises an arc 305. The arc 305 is attached between the first lower 304 and the second lower 304. The first lower 304 and the second lower 304' are axially moveable relative the first stanchion 303 and the second stanchion 303'. The telescopic front fork 300 comprises a through axle 306. The through axle 306 is connected between the first lower 304 and the second lower 304'. The telescopic front fork 300 comprises one or more bushings 1, 1'. The one or more bushings 1, 1' may for instance be arranged respectively between a stanchion 303, 303' and a lower 304, 304'.

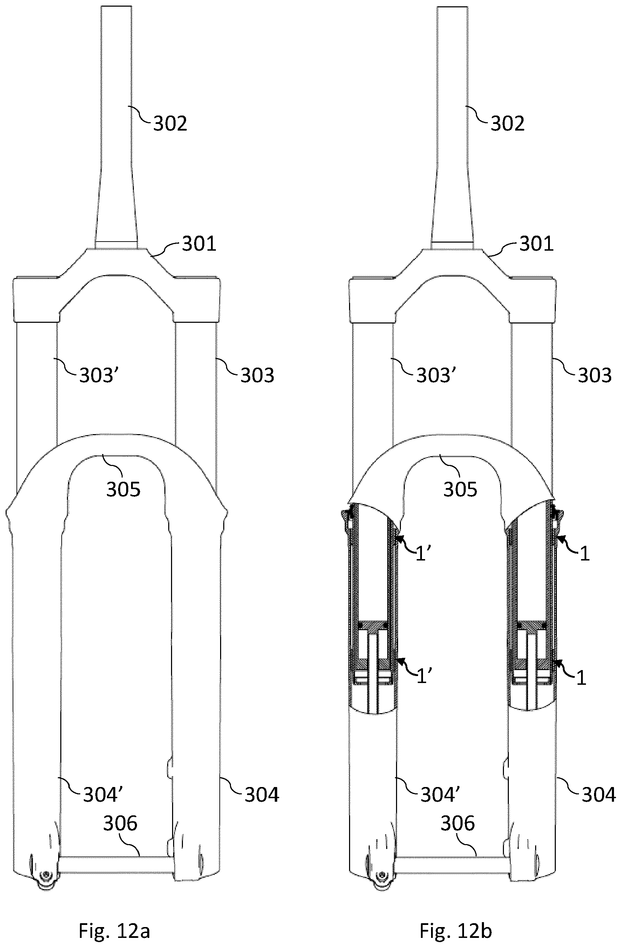

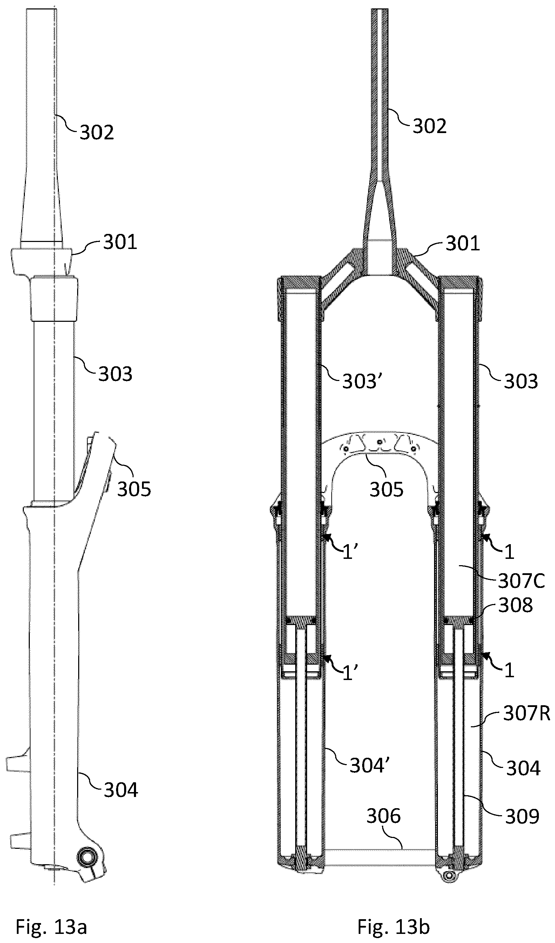

Fig. 12a shows a front view of a telescopic front fork 300 according to one embodiment of the disclosure. Fig. 12b shows a partially cross-sectional front view of a telescopic front fork 300 according to one embodiment of the disclosure. Fig. 13a shows a side view of a telescopic front fork according to one embodiment of the disclosure. Fig. 13b shows a cross-sectional rear view of a telescopic front fork according to one embodiment of the disclosure. The telescopic front fork 300 comprises a crown 301. The telescopic front fork 300 comprises a steerer tube 302. The steerer tube 302 is attached to the crown 301. The telescopic front fork 300 comprises a first stanchion 303 and a second stanchion 303'. The first stanchion 303 and the second stanchion 303' are attached to the crown 301. The telescopic front fork comprises a first lower 304 and a second lower 304'. The first stanchion 303 is adapted to be inserted into the first lower 304. The second stanchion 303' is adapted to be inserted into the second lower 304'. The telescopic front fork comprises an arc 305. The arc 305 is attached between the first lower 304 and the second lower 304. The first lower 304 and the second lower 304' are axially moveable relative the first stanchion 303 and the second stanchion 303'. The telescopic front fork 300 comprises a through axle 306. The through axle 306 is connected between the first lower 304 and the second lower 304'. Each leg of the telescopic front fork, i.e., each pair of stanchion and lower, provides a first inner space 307C and a second inner space 307R. The first inner space 307C and the second inner space 307R are separated by a piston 308 adapted to move in the stanchion 303. The piston 308 is attached to a piston rod 309 attached to the lower 304. The telescopic front fork 300 comprises one or more bushings 1, 1'. The one or more bushings 1, 1' may for instance be arranged respectively between a stanchion 303, 303' and a lower 304, 304'. As exemplified in Fig. 13b, each leg of the telescopic front fork 300 may be provided by two bushings 1 as herein disclosed, which two bushings 1 in each leg are separated an axial distance from one another.

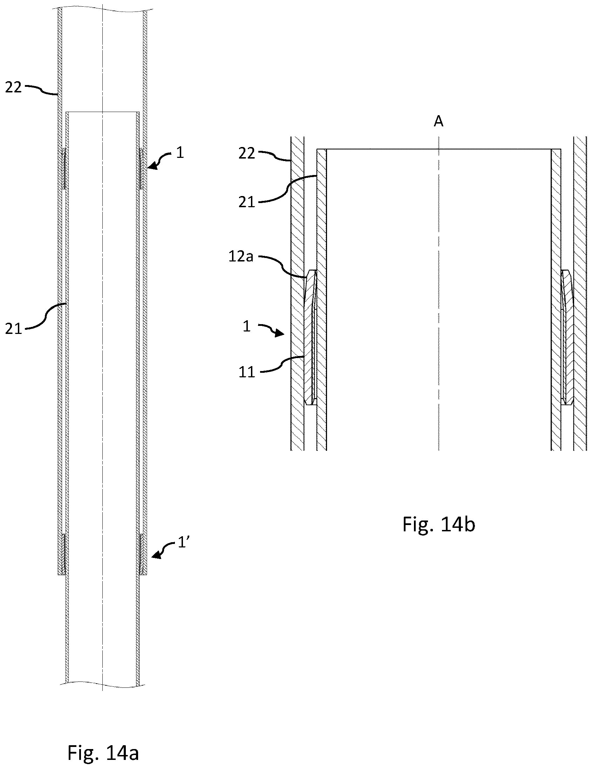

Fig. 14a shows a cross-sectional side view of two bushings 1, 1' according to one embodiment of the disclosure arranged between an inner part 21 and a surrounding part 22 of a telescopic front fork or of a shock absorber. Fig. 14b shows a zoomed-in cross-sectional side view of a bushing 1 according to one embodiment of the disclosure when arranged between an inner part 21 and a surrounding part 22 of a telescopic front fork or of a shock absorber. The first bushing portion 12a is provided with a smaller inner diameter than the body 11. The difference in inner diameter may be provided by means of inserting a sizing tool into the bushing 1. The first bushing portion 12a is provided with a smaller outer diameter than the body 11. Generally, the difference in inner diameter may be provided by means of inserting a sizing tool into the bushing 1. Generally, the difference in inner diameter may be provided by other means than inserting a sizing tool into the bushing 1, such as by a process of turning.

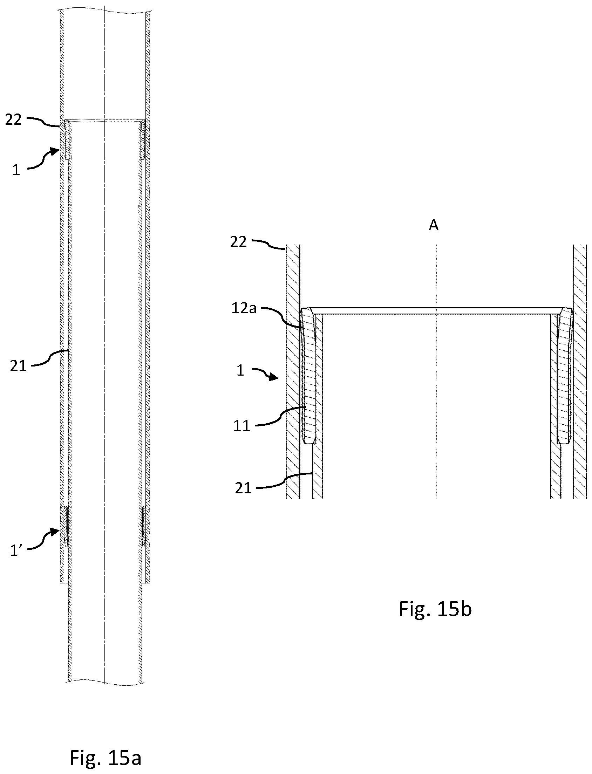

Fig. 15a shows a cross-sectional side view of two bushings 1, 1' according to one embodiment of the disclosure arranged between an inner part and a surrounding part of a telescopic front fork or of a shock absorber. Fig. 15b shows a zoomed-in cross-sectional side view of a bushing 1 according to one embodiment of the disclosure when arranged between an inner part 21 and a surrounding part 22 of a telescopic front fork or of a shock absorber. The first bushing portion 12a is provided with a larger inner diameter than the body 11. The first bushing portion 12a is provided with a larger outer diameter than the body 11.

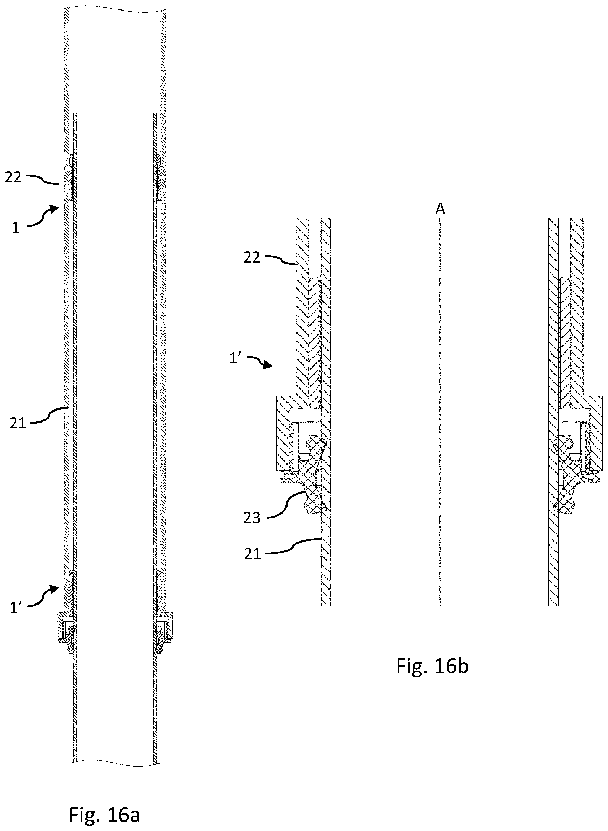

Fig. 16a shows a cross-sectional side view of a bushing according to one embodiment of the disclosure arranged between an inner part and a surrounding part of a telescopic front fork or of a shock absorber. Fig. 16b shows a cross-sectional side view of a bushing according to one embodiment of the disclosure when arranged between an inner part and a surrounding part of a telescopic front fork or of a shock absorber. A first bushing 1 according to the disclosure may be arranged between an inner part and a surrounding part. A second bushing 1' adapted with no bushing portions may be arranged between the inner part 21 and the surrounding part 22. Moreover, a sealing member 23 may be provided between the inner part 21 and the surrounding part 22. The sealing member 23 may be a wiper 23.

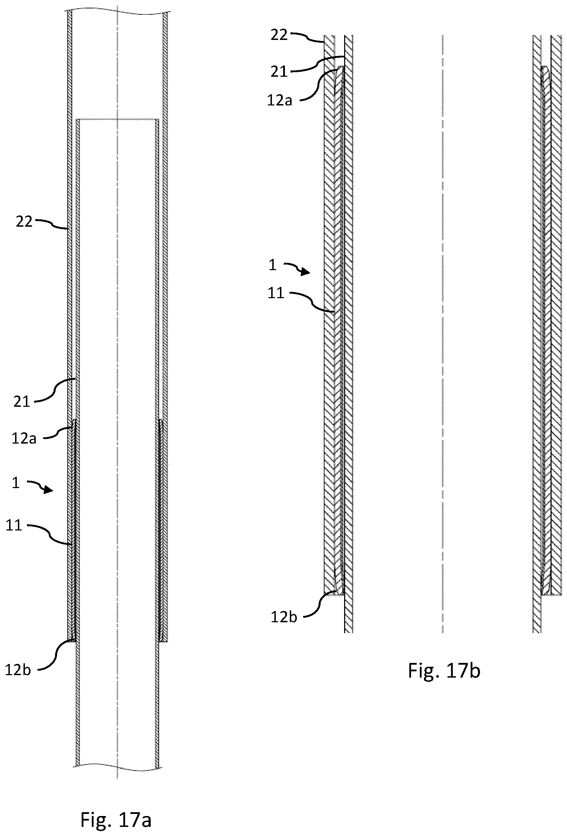

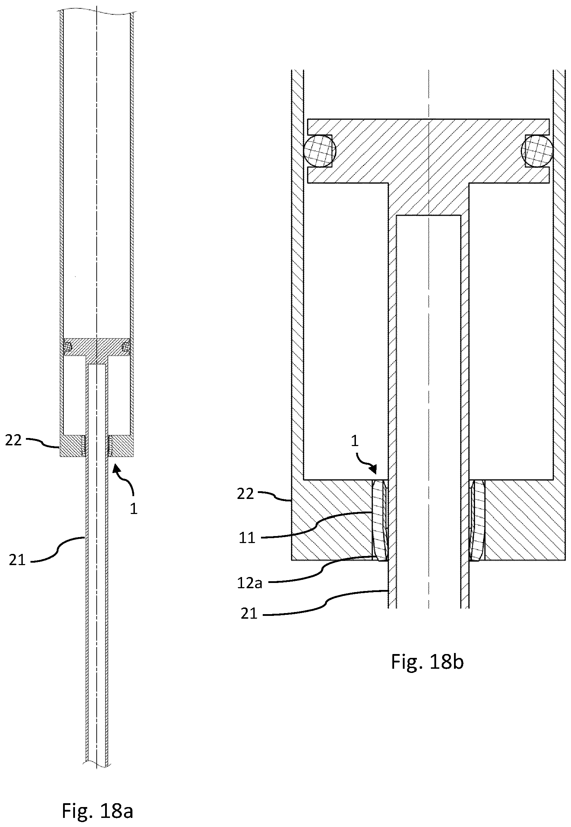

Advantageously, at least a pair of flexible members may be arranged axially spaced apart between the inner part 21 and the surrounding part 22, so as to cooperate to distribute stresses, e.g., arising from bending forces, in a more even manner. By this, performance and durability may be even more improved. The at least a pair of flexible members may include: two bushings each comprising a bushing portion as exemplified in Figs. 14a-14b or Figs. 15a-15b; a longer variant of a bushing comprising two bushing portions as exemplified in Figs. 17a-17b; or one bushing comprising a bushing portion cooperating with a sealing member, such as a wiper 23 or an O-ring, as exemplified in Figs. 16a-16b or Figs. 18a-18b.

Fig. 17a shows a cross-sectional side view of a bushing 1 according to one embodiment of the disclosure arranged between an inner part 21 and a surrounding part 22 of a telescopic front fork or of a shock absorber. Fig. 17b shows a zoomed-in cross-sectional side view of a bushing 1 according to one embodiment of the disclosure when arranged between an inner part 21 and a surrounding part 22 of a telescopic front fork or of a shock absorber. The body 11 extends in a longitudinal direction which is much greater than the longitudinal length of either the first bushing portion 12a and the second bushing portion 12b. The body 11 is provided with an inner diameter which is larger than inner diameters of the first bushing portion 12a and the second bushing portion 12b. The body 11 is provided with an outer diameter which is larger than outer diameters of the first bushing portion 12a and the second bushing portion 12b.

Fig. 18a shows a cross-sectional side view of a bushing 1 according to one embodiment of the disclosure arranged between a piston rod and cylinder of a shock absorber. Fig. 18b shows a zoomed-in cross-sectional side view of a bushing 1 according to one embodiment of the disclosure arranged between a piston rod and cylinder of a shock absorber. The body 11 is provided with an inner diameter which is larger than inner diameters of the first bushing portion 12a. The body 11 is provided with an outer diameter which is larger than the outer diameter of the first bushing portion 12a.

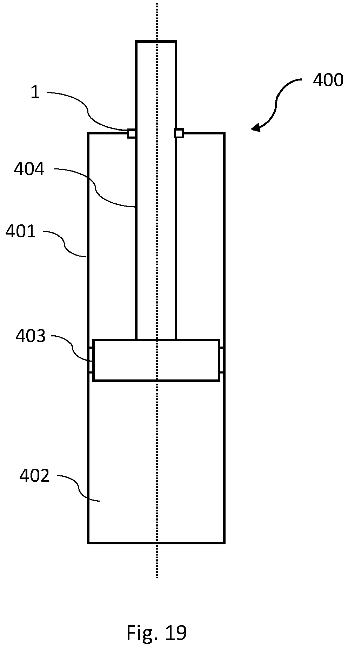

Fig. 19 shows a schematic illustration of a shock absorber 400 comprising a bushing 1 according to one embodiment of the disclosure. The bushing 1 is arranged between a cylinder 401 of the shock absorber 400 and a piston rod 404 of the shock absorber 400. Thereby, the bushing 1 enables distribution of forces in a preferred manner. The bushing 1 may however be arranged between an inner tube and an outer tube of the shock absorber.

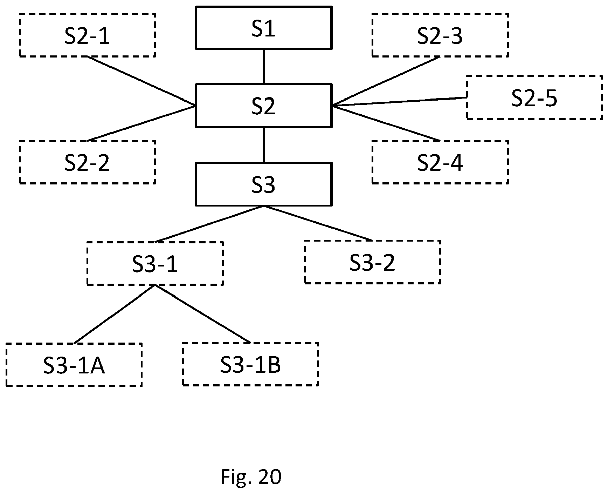

Fig. 20 illustrates a flow chart of a method of manufacturing a bushing according to one embodiment of the disclosure. The method of comprises: a step S1 of providing a bushing material. The method comprises a step S2 of manufacturing a bushing element from said bushing material so that the bushing element comprises: a body 11 extending along a longitudinal axis A, the body 11 adapted with a through-hole 10 with a first inner surface at a first inner diameter and optionally a second inner surface at a second inner diameter larger than the first inner diameter, and a first bushing portion 12a extending from the body 11 along the longitudinal axis A. The method comprises a step S3 of adapting the bushing element in size and shape so as to provide the bushing as herein exemplified. Optionally, the step S2 of manufacturing a bushing element from said bushing material comprises one of, or a combination of, the following manufacturing processes: injection molding S2-1, casting S2-2, machining S2-3, pressing S2-4 and forming S2-5. As a non-limiting example, the manufacturing process may include pressing S2-4 a bushing material into a material blank and forming S2-5 the material blank. Any other of said combinations may be used.

In one embodiment, the step S3 of adapting the bushing element in size and shape so as to provide the bushing as herein exemplified comprises: a step S3-1 of inserting a sizing tool into the bushing element so as to increase an inner diameter of the first inner surface from the first inner diameter to a first post-sizing inner diameter, whereby one or more bushing portions of the bushing element are subjected to elastic deformation and the first inner surface is subjected to plastic deformation so as to increase the first inner diameter to the first post-sizing inner diameter.

Optionally, said step S3-1 of inserting the sizing tool is performed after S3-1A or before S3-1B assembly of the bushing between the inner part and the surrounding part.

Optionally, the step S3 of adapting the bushing element in size and shape so as to provide the bushing as herein exemplified comprises: a step S3-2 of providing a coating, such as a low friction coating, on an inside of the bushing element, so that said first inner surface and optionally said second inner surface is provided by said coating.

While the foregoing is directed to embodiments of the disclosure, other and further embodiments may be devised without parting from the inventive concept discussed herein. The scope of the invention is however determined by the claims.

## Claims

1. A bushing (1) for arrangement between an inner part (21) and a surrounding part (22) of a telescopic front fork or of a shock absorber, the bushing (1) comprising:
a body (11) extending along a longitudinal axis (A), the body (11) adapted to be arranged in the surrounding part (22) and adapted with a through-hole (10) for receiving the inner part (21), the body (11) adapted to engage with a first part (22, 21) of the inner part (21) and the surrounding part (22);
a first bushing portion (12a) extending from the body (11) along the longitudinal axis (A), the first bushing portion (12a) adapted to engage with a second part (21, 22) of the inner part (21) and the surrounding part (22),
wherein
the body (11) is adapted in size and shape so that a body clearance (RC0) is provided between the body (11) and the second part (21, 22) when the bushing (1) is arranged between the inner part (21) and the surrounding part (22), and
the first bushing portion (12a) is adapted in size and shape so that a first radial clearance (Rca) is provided between the first bushing portion (12a) and the first part (22, 21) when the bushing (1) is arranged between the inner part (21) and the surrounding part (22).

2. The bushing (1) according to claim 1, comprising a second bushing portion (12b) extending from the body (11) along the longitudinal axis (A) at an opposite side of the body (11) than the first bushing portion (12a),
wherein
the second bushing portion (12b) is adapted to engage with the second part (21, 22) of the inner part (21) and the surrounding part (22), and
the second bushing portion (12b) is adapted in size and shape so that a second radial clearance (RCb) is provided between the second bushing portion (12b) and the first part (22, 21) when the bushing (1) is arranged between the inner part (21) and the surrounding part (22).

3. The bushing (1) according to any of the preceding claims, wherein the first bushing portion (12a) and/or the second bushing portion (12b) is adapted with a lower stiffness than the body (11).

4. The bushing (1) according to any preceding claims, wherein the first bushing portion (12a) and/or the second bushing portion (12b) is adapted with one or more longitudinal slots and/or one or more inner grooves (123) extending in a longitudinal direction, or wherein the first portion (12a) and/or the second bushing portion (12b) are adapted without any longitudinal slots, seams, or groves (23).

5. The bushing (1) according to any of the preceding claims, comprising an inner low friction interface located on an inside of the bushing and/or an outer low friction interface located on an outside of the bushing, wherein the inner low friction interface and/or the outer low friction interface is provided by a plastic material such as Teflon.

6. The bushing (1) according to any of the preceding claims, adapted as a single part.

7. The bushing (1) according to any of the preceding claims, wherein the first bushing portion (12a) and/or a second bushing portion (12b) is adapted with a nominal inner diameter substantially equal to the outer diameter of the inner part (21) or a nominal outer diameter substantially equal to the inner diameter of the surrounding part (22).

8. The bushing (1) according to any of the preceding claims, adapted to engage with the inner part (21) and the surrounding part (22) so that
the first part is the surrounding part (22) and the second part is the inner part (21) wherein the radial clearance is provided between the first bushing portion (12a) and the surrounding part (22), or
the first part is the inner part (21) and the second part is the surrounding part (22) wherein the radial clearance is provided between the first bushing portion (12a) and the inner part (21).

9. The bushing (1) according to any preceding claims, adapted for
a telescopic front fork, wherein the surrounding part (22) is an outer tube and the inner part (21) is an inner tube, or
a shock absorber, wherein the surrounding part (22) is an outer tube and the inner part (21) is a piston rod or an inner tube.

10. The bushing (1) according to any preceding claims, provided in
a plastic material, or
a metal material, such as aluminum, steel, or the like, preferably formed by a blank of said metal material.

11. The bushing (1) according to any preceding claims, wherein the body (11) is adapted to engage fixedly with the first part (22, 21) by means of press-fitting and/or an adhesive.

12. A telescopic front fork for a bicycle or a motorbike, the telescopic front fork comprising an outer tube and an inner tube, and one or more bushings (1) according to any preceding claims arranged between the outer tube and the inner tube.

13. A shock absorber for a vehicle, the shock absorber comprising
an outer tube and an inner tube, and one or more bushings (1) according to any of claims 1-11 arranged between the outer tube and the inner tube, or
a tube and a piston rod, and one or more bushings (1) according to any of claims 1-11 arranged between the tube and the piston rod.

14. Method of manufacturing a bushing, comprising:
providing (S1) a bushing material;
manufacturing (S2) a bushing element from said bushing material, the bushing element comprising:
- a body (11) extending along a longitudinal axis (A), the body (11) adapted with a through-hole (10) with a first inner surface at a first inner diameter and optionally a second inner surface at a second inner diameter larger than the first inner diameter, and
- a first bushing portion (12a) extending from the body (11) along the longitudinal axis (A),
adapting (S3) the bushing element in size and shape so as to provide the bushing according to any of claims 1-13,
wherein, optionally, the step of manufacturing (S2) a bushing element from said bushing material comprises one of, or a combination of, the following manufacturing processes: injection molding (S2-1), casting (S2-2), machining (S2-3), pressing (S2-4) and forming (S2-5).

15. Method according to claim 14, wherein the step of adapting (S3) the bushing element in size and shape so as to provide the bushing according to any of claims 1-13 comprises:
inserting (S3-1) a sizing tool into the bushing element so as to increase an inner diameter of the first inner surface from the first inner diameter to a first post-sizing inner diameter,
whereby one or more bushing portions of the bushing element are subjected to elastic deformation and the first inner surface is subjected to plastic deformation so as to increase the first inner diameter to the first post-sizing inner diameter,
wherein, optionally, said step of inserting (S3-1) the sizing tool is performed after (S3-1A) or before (S3-1B) assembly of the bushing between the inner part and the surrounding part,
wherein, optionally, the step of adapting (S3) the bushing element in size and shape so as to provide the bushing according to any of claims 1-13 comprises:
providing (S3-2) a coating, such as a low friction coating, on an inside of the bushing element, so that said first inner surface and optionally said second inner surface is provided by said coating.
